# EUROPEAN PATENT SPECIFICATION

(11) **EP 0 654 407 B1**
(45) Date of publication and mention of the grant of the patent: **03.09.1997**
(21) Application number: 94117584.6
(22) Date of filing: 08.11.1994
(51) Int. Cl.: B65B 35/20, B65B 25/14, B65G 47/252, B65G 47/08

(54) **Machine for packing articles**
Maschine zum Verpacken von Gegenständen
Machine pour emballer des articles

(30) Priority: 19.11.1993 IT BO930462
(43) Date of publication of application: 24.05.1995
(73) Proprietor: CASMATIC S.p.A., 40033 Casalecchio di Reno (Bologna) (IT)
(72) Inventor: Cassoli, Paolo, I-40033 Casalecchio Di Reno (Bologna) (IT); Cassoli, Stefano, I-40033 Casalecchio Di Reno (Bologna) (IT)
(74) Representative: Porsia, Dino, Dr.

(56) References cited:
- DE-A- 2 852 741
- US-A- 3 340 672
- US-A- 3 455 085

## Description

Machines for packing sets consisting of superimposed layers of products such as, for example, rolls of paper, boxes and the like, coming side by side from a single feeding line, are known. Machines of this kind are disclosed in, for example, US Patent No. 3 455 085 (corresponding to Italian Patent No. 1 225 033) to which documents full reference is made. These machines can also, if necessary, pack a set consisting of a single layer of products, but on the condition that these are not very tall, because the pushing action applied by the cross pieces of the conveyors to very tall products would be unbalanced and would lead to such products' falling over. Machines of known kind are able for example to pack sets consisting of a plurality of superimposed layers or of a single layer of rolls of toilet paper, but are incapable of packing a layer of large rolls of kitchen paper or other similar products.

Prior art document DE-A-2 852 741 discloses a machine for packing products such as rolls of paper for domestic use, in which the rolls are orientated from a horizontal position to a vertical position for being packed, by means of curved guide channels.

According to the present invention, there is provided a combined machine according to claim 1, whose features and advantages will appear clearly in the following description of a preferred embodiment illustrated in the figures of the accompanying sheets of drawings, in which:
- Fig. 1 diagrammatically illustrates the machine in the setup for packing rolls of toilet paper;
- Fig. 2 illustrates the machine in the setup for packing large rolls of kitchen paper or the like;
- Figs. 3 and 4 diagrammatically illustrate the packs produced by the machines shown in Figures 1 and 2 respectively; and
- Fig. 5 is an enlarged lateral view of the movable end part of the machine which enables large rolls of paper to be packed.

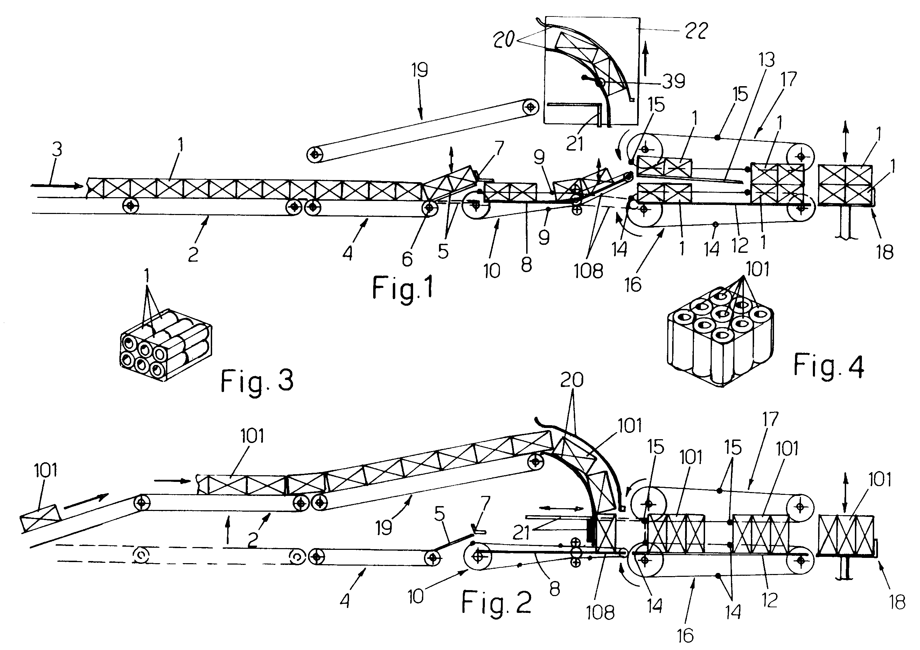

With reference initially to Figure 1, it can be seen that the machine for packing one or more superimposed layers of rolls 1 of toilet paper comprises a conveyor 2 on which these rolls travel in single file and in a plurality of parallel lines in the direction indicated by the arrow 3. The axes of the rolls may be horizontal or vertical. In the example illustrated, it is assumed that the axes of the rolls are horizontal. From the conveyor 2 the rolls are fed to a conveyor 4 equipped at the end part with a surface 5 which cyclically oscillates about a transverse spindle 6 and which, when raised, stops the lines of rolls against a retainer 7, whereas when lowered it permits these rolls to pass through in guide channels 8 in which said oscillating surface forms sets made up of a predetermined number of rolls. When the oscillating surface 5 rises, the set of rolls that has been fed into the channels 8 is pushed forward by one of the cross pieces 9 of a parallel-chain conveyor 10. The guide channels 8 have an end part 108 which, when a command is sent, oscillates about a transverse spindle 11 so that the sets of rolls 1 are fed alternately to two superimposed preparation surfaces 12, 13 separated from each other by a distance slightly greater than the height of the rolls. When corresponding sets of rolls have been fed onto the surfaces 12, 13, these rolls are pushed simultaneously by the cross pieces 14 and 15 of synchronized parallel-chain conveyors 16 and 17, which introduce the superimposed sets of rolls onto a lift 18 which transfers them all together to a packing station (not shown). Figure 3 shows for example a pack of rolls 1 produced by the machine as depicted in Figure 1.

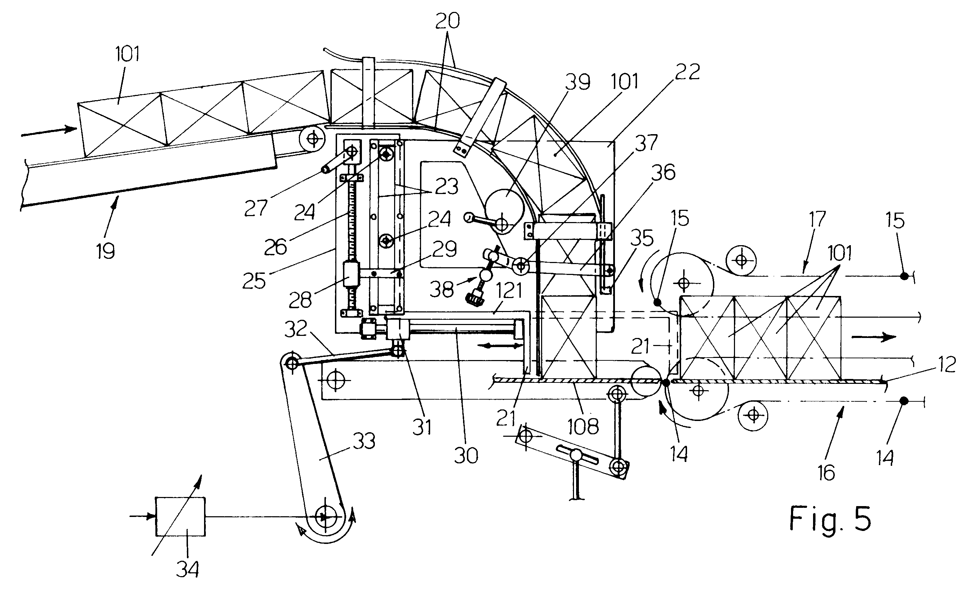

In order to make it possible for such a machine to also pack sets of large rolls of paper as an alternative to the above, the following arrangements have been devised. With reference to Figure 2, it can be seen that the conveyors 4 and 10 are stopped and the end part 108 of the guide channels 8 is stopped in the low position level with the preparation surface 12. The conveyor 10 will be stopped in such a way that the part 108 is free of cross pieces 9 which may be designed for easy removal. The upper preparation surface 13 is removed. The conveyor 2 is raised level with an inclined conveyor 19 which feeds the lines of large rolls 101, whose axes are initially horizontal, into downwardly-curved guide channels 20 which are lowered so that their lower end part is a short distance above said guide portion 108, to which the large rolls come with their axes vertical. The guide channels 20 are open on the side facing towards the preparation surface 12, over a height equal to that of the large rolls 101, so that the bottommost roll can be cyclically transferred to this surface by a pusher 21 provided with a horizontal upper part 121 which supports the large rolls inside the channels 20 above those being transferred. When the pusher 20 returns to the rest position, the large rolls inside the channels 20 drop down onto the surface 108 and the cycle described is repeated until the predetermined set of large rolls has been prepared on the preparation surface 12. At the right moment this predetermined set is pushed by the cross pieces 14, 15 of the conveyors 16, 17 and the latter transfers it to the lift 18, which then introduces it into the packing station. The large rolls 101, even if very tall, are introduced with no problems of falling over, under the synchronized and balanced action of the cross pieces 14, 15, into the packing station. In order to vary the quantity of large rolls introduced cyclically into the packing station, the possibility is provided of varying the frequency of the back and forth strokes of the pusher 21, in phase with the machine cycle, as described in greater detail below. The dimensions of the guide channels 20 are such that large rolls of different dimensions can be handled, and for this purpose the channels 20 may be provided with suitable means of adjustment. The detail in Figure 5 shows that the guide channels 20 are supported by a frame 22 provided with vertical slides 23 running on rollers or other suitable means 24 carried by a fixed frame 25, mounted on which, parallel with said slides, are screws 26 that can be made to rotate by a control 27 and that engage with nuts 28 attached at 29 to said movable frame 22. At the bottom, the frame 22 supports the horizontal guides 30 on which there runs the carriage 31, which carries the pusher 21 and is connected by a connecting rod 32 to a lever 33 moving in the oscillating manner required to carry said pusher through its back and forth stroke between the limit positions indicated in dashes and in continuous lines. As already stated, the lever 33 is driven by any adjustable and/or programmable kinematic system 34 so that the frequency of oscillation of the lever 33 can be varied, in phase with the machine cycle, so as to vary the number of large rolls 101 grouped together on the preparation surface 12 for subsequent transfer to the packing station. The kinematic system 34 may for example comprise an electronically controlled motor (e.g. a brushless motor) programmable via the machine's control panel and connected to an electronic processor which reads the phase of the machine through an appropriate encoder; all of which can be devised and easily constructed by those skilled in the art. On the lower discharging side of the guide channels 20 is a cross piece 35 whose height is adjustable as a function of the height of the large rolls, by means of a lever 36 pivoting at 37 and adjusted by means of the micrometric screw and nut device 38.

Figure 4 illustrates, by way of example, a pack of large rolls produced by the machine as discussed above with reference to Figure 2.

When the machine is to be employed for packing rolls 1 of toilet paper, as in Figure 1, the connecting rod 32 is disconnected from the lever 33 (Fig. 5), the unit 34 is deactivated, any remaining large rolls still inside the guide channels 20 are immobilized by means of the cranks 39 and the control 27 is then operated to lift the frame 22 with its accompanying devices, as diagrammatically illustrated in Figure 1, so that the part 108 has the necessary freedom to oscillate. The conveyor 2 is lowered and made level again with the conveyor 4, as already stated with reference to Figure 1.

It is obvious that the part that feeds the large rolls, being located above the other parts of the machine, does not create space problems.

## Claims

1. A machine for packing articles such as small size or large size rolls of paper (1, 101) comprising a feeding line (2), a first conveyor (10) with pushing cross pieces (9), said first conveyor being provided with at least one pivoting end portion (108) which positions itself alternately against superimposed lower and upper stracking surfaces (12, 13), synchronized conveyors (16, 17) with pushing cross pieces (14, 15) being provided at the stacking surfaces for delivering the rolls onto a wrapping machine lifting platform (18)
characterized by the fact that
for use in connection with large size rolls (101), the upper stacking surface (13) is removable, the pivoting end portion (108) is lockable in alignment with the lower stacking surface (12) and over said locked pivoting end portion there is positionable the lower end part of a battery of upwardly-orientated adjacent curved guide channels (20) presenting an upper mouth which is level with a conveyor (19) for feeding into them large size rolls (101) arriving from the feeding line (2), while a pusher (21) is located in the lower part of said guide channels (20) and moves with a horizontal rectilinear reciprocating movement in order cyclically to transfer at least the lower roll from said guide channels onto the lower stacking table (12) where the cyclically formed sets of large rolls are carried off by the pushing cross pieces of the synchronized conveyors (16, 17) which feed the said sets of large rolls onto the wrapping machine lifting platform (18).

2. A machine according to Claim 1, in which the curved guide channels (20) that pick up the large rolls are mounted on a frame (22) supported, with the possibility of vertical movement, by a fixed frame (25), and screw and nut means (26, 28) are provided for moving said frame from the raised position of rest into the lowered working position; there being mounted on this frame the horizontal guides (30) carrying the pusher (21) which cyclically transfers the rolls from the guide channels to the surface (12) and which has a horizontal upper part (121) which, during the active stroke, supports the rolls located above that roll which is being transferred; said pusher being driven by the connection through a system of connecting rods and levers (32, 33) to an adjustable-type motor unit (34).

3. A machine according to claim 1, in which that portion of the conveyor (2) which feeds the rolls (1) to the first conveyor (10), is so designed that it can be raised and brought level with an inclined rising conveyor (19) which feeds the large rolls to the curved guide channels (20) when these channels are lowered into working position.

4. A machine according to claim 2, in which at the bottom of the curved channels for guiding the large rolls, on the side from which these rolls exit, is an aperture for these products to pass through, said aperture being defined above by a cross piece (35) whose height can be adjusted as a function of the height of the large rolls using by suitable means of adjustment (36, 37, 38).

5. A machine according to claim 1, comprising means (39), for immobilising, inside the curved channels through which the large rolls are guided, those rolls which are positioned above the pusher (21), before the entire unit is raised into the rest position.

## Patentansprüche

1. Maschine zum Verpacken von Gegenständen wie klein- oder großformatige Papierrollen (1,101), bestehend aus einer Zubringerstrecke (2), einem ersten Fördermittel (10) mit Schubquerteilen (9), wobei das erste Fördermittel mit einem verschwenkbaren Endabschnitt (108) versehen ist, der sich selbständig alternativ gegen übereinanderliegende untere und obere Stapelflächen (12,13) einstellt, sowie synchronisierten, mit Schubquerteilen (14,15) versehenen Fördermitteln (16,15), die an den Stapelflächen vorgesehen sind, um die Rollen auf die Hubplattform (18) einer Verpackungsmaschine zu übergeben, dadurch gekennzeichnet, daß zur Verwendung in Verbindung mit großformatigen Rollen (101) die obere Stapelfläche (13) abnehmbar ist, der verschwenkbare Endabschnitt (108) fluchtend zur unteren Stapelfläche (12) feststellbar und über dem festgestellten verschwenkbaren Endabschnitt der untere Endteil einer Gruppe nach oben gerichteter, gebogener Führungskanäle (20) positionierbar ist, die eine obere Öffnung aufweisen, die in gleicher Höhe mit einem Fördermittel (19) liegt, um in diese, von der Zubringerstrecke (2) kommende großformatige Rollen (101) einzugeben, während ein Schieber (21) im unteren Bereich der Führungskanäle (20) angeordnet und horizontal geradlinig hin- und herbewegbar ist, um zyklisch zumindest die untere Rolle aus den Führungskanälen auf die untere Stapelfläche (12) zu übertragen, wo die zyklisch gebildeten Gruppen aus großen Rollen durch die Schubquerteile der synchronisierten Fördermittel (16,17) weggeführt werden, welche die Gruppen der großen Rollen auf die Hubplatte (18) der Verpackungsmaschine übergeben.

2. Maschine nach Anspruch 1, bei der die gebogenen Führungskanäle (20), welche die großen Rollen aufnehmen, an einen Rahmen (22) angebracht sind, der mit der Möglichkeit einer vertikalen Bewegung von einem festen Rahmen (25) getragen wird, und bei der Schrauben- und Mutterorgane (26,28) zur Bewegung des Rahmens aus einer angehobenen Ruhelage in die untere Arbeitslage vorgesehen sind; wobei an diesem Rahmen die horizontalen, die Schieber (21) tragenden Führungen (30) angebracht sind, welche die Rollen zyklisch von den Führungskanälen zu der Fläche (12) überführen und der ein horizontales Oberteil (121) aufweist, das während des aktiven Hubs die Rollen abstützt, die sich über den zu überführenden Rollen befinden; die Schieber werden durch die Verknüpfung eines Systems von Verbindungsstangen und -hebeln (32,33) mit einer verstellbaren Motoreinheit (34) angetrieben.

3. Maschine nach Anspruch 1, bei welcher der Teil des Fördermittels (2), der die Rollen (1) zum ersten Fördermittel (10) überführt, derart ausgebildet ist, daß er angehoben und in eine Höhe mit einem schräggestellten ansteigenden Fördermittel (19) gebracht werden kann, das die großen Rollen den gebogenen Führungskanälen (20) zuführt, wenn diese Kanäle in die Arbeitslage abgesenkt sind.

4. Maschine nach Anspruch 2, bei der der Boden der gebogenen Kanäle zur Führung der großen Rollen auf der Seite, wo diese Rollen herauskommen, eine Öffnung für den Durchlaß dieser Produkte darstellt, wobei diese Öffnung oben durch ein Querstück (35) abgegrenzt ist, dessen Höhe als Funktion der Höhe der großen Rollen einstellbar ist durch Verwendung üblicher Einstellmittel (36,37,38).

5. Maschine nach Anspruch 1, bestehend aus Mitteln (39) zum Feststellen innerhalb der gebogenen Kanäle, durch welche die großen Rollen geführt werden, jener Rollen, die sich über dem Schieber (21) befinden, ehe die ganze Einheit in die Ruhelage angehoben wird.

## Revendications

1. Machine pour emballer des articles tels que des rouleaux de papier de petite ou de grande taille (1,101) comprenant une ligne d'alimentation (2), un premier convoyeur (10) muni de pièces transversales pour pousser (9), ledit premier convoyeur étant muni d'au moins une extrémité pivotante (108) qui se positionne de lui-même alternativement contre des surfaces d'empilage inférieure et supérieure superposées (12, 13), des convoyeurs synchronisés (16,17) avec des pièces transversales pour pousser (14,15) étant fournis aux surfaces d'empilage pour livrer les rouleaux sur la plateforme de levage d'une machine à emballer (18), **caractérisée** en ce que, pour une utilisation en relation avec des rouleaux de grande taille (101), la surface d'empilage supérieure (13) est amovible, l'extrémité pivotante (108) est verrouillable en alignement avec la surface inférieure d'empilage (12), et, sur ladite extrémité pivotante verrouillée on peut positionner l'extrémité inférieure d'un groupe de canaux de guidage recourbés, adjacents, orientés vers le haut, présentant une bouche supérieure de niveau avec le convoyeur (19) pour alimenter ces canaux en rouleaux de grande taille (101) arrivant de la ligne d'alimentation (2), pendant qu'une pousseuse (21), située dans la partie inférieure desdits canaux de guidage (20), se déplace dans un mouvement horizontal rectiligne de va-et-vient afin de transférer de manière cyclique au moins le rouleau inférieur depuis lesdits canaux de guidage jusque sur la table d'empilage inférieure (12), où les ensembles de rouleaux de large taille formés par cycles sont transportés par les pièces transversales pour pousser des convoyeurs synchronisés (16,17), qui fournissent lesdits ensembles de rouleaux de grande taille à la plateforme de levage de la machine à emballer (18).

2. Machine selon la revendication 1, dans laquelle les canaux de guidage recourbés (20) qui prennent les grands rouleaux sont montés sur un cadre (22) soutenu par un cadre fixe (25), avec possibilité de mouvement vertical, et des vis et des écrous (26, 28) sont fournis pour déplacer ledit cadre depuis la position élevée de repos vers la position basse de travail; sur ce cadre étant montés les guides horizontaux (30) portant la pousseuse (21) qui transfère cycliquement les rouleaux des canaux de guidage vers la surface (12) et qui possède une partie supérieure horizontale (121) qui, pendant la course active soutient les rouleaux situés au-dessus du rouleau en cours de transfert; ladite pousseuse étant commandée par la connection avec un bloc moteur de type réglable (34) à travers un système de leviers et de barres de raccordement (32,33).

3. Machine selon la revendication 1, dans laquelle la partie du convoyeur (2) qui fournit les rouleaux (1) au premier convoyeur (10) est conçue de telle façon qu'elle peut être élevée et amenée de niveau avec un convoyeur incliné montant (19) qui fournit les grands rouleaux aux canaux de guidage recourbés (20) lorsque ces canaux sont abaissés en position de travail.

4. Machine selon la revendication 2, dans laquelle, au bas des canaux recourbés pour guider les grands rouleaux, sur le côté où sortent les rouleaux, se trouve une ouverture à travers laquelle ces produits passent, ladite ouverture étant déterminée sur le dessus par une pièce transversale (35) dont la hauteur peut être réglée en fonction de la hauteur des grands rouleaux grâce à un moyen de réglage adapté (36,37,38).

5. Machine selon la revendication 1, comprenant des moyens (39) pour immobiliser, à l'intérieur des canaux recourbés dans lesquels les grands rouleaux sont guidés, ces rouleaux positionnés au-dessus de la pousseuse (21), avant que l'unité entière ne soit élevée en position de repos.
